## Europäisches Patentamt
## European Patent Office
## Office européen des brevets

(11) Numéro de publication: **0 030 908**
**B1**

(12) **FASCICULE DE BREVET EUROPEEN**

(45) Date de publication du fascicule du brevet: **31.10.84**

(21) Numéro de dépôt: **80420144.0**

(22) Date de dépôt: **12.12.80**

(51) Int. Cl.³: **A 01 B 33/00, A 01 B 9/00**

(54) Machine-outil agricole pour le travail du sol.

(30) Priorité: **14.12.79 FR 7931355**

(43) Date de publication de la demande:
**24.06.81 Bulletin 81/25**

(45) Mention de la délivrance du brevet:
**31.10.84 Bulletin 84/44**

(84) Etats contractants désignés:
**BE CH DE FR GB IT LI NL SE**

(56) Documents cités:
**DE-C- 45 401**
**DE-C- 485 331**
**FR-A- 408 816**
**FR-A- 444 451**
**FR-A- 492 996**
**FR-A- 996 079**
**FR-A-1 262 556**
**FR-A-1 334 031**
**GB-A- 29 825**
**GB-A- 407 333**
**US-A-1 349 821**
**US-A-1 522 800**
**US-A-1 726 177**
**US-A-3 454 102**

(73) Titulaire: **Bouchet, André**
**Lieudit Tarency**
**F-73410 La Biolle (FR)**

(72) Inventeur: **Bouchet, André**
**Lieudit Tarency**
**F-73410 La Biolle (FR)**

(74) Mandataire: **Maisonnier, Jean**
**28 rue Servient**
**F-69003 Lyon (FR)**

Courier Press, Leamington Spa, England.

## Description

La présente invention concerne un outillage agricole pour le travail du sol.

L'invention s'adresse en particulier au travail du sol dans tous les cas où l'on désire travailler la terre en une seule opération, c'est-à-dire en un seul passage du tracteur, sur une bande de terrain de grande largeur.

Ce genre de travail nécessite bien entendu l'utilisation de tracteurs agricoles de forte puissance, par exemple d'une puissance de l'ordre de 300 chevaux, et est actuellement réalisable à l'aide de divers outils de grande largeur, tels que des charrues à socs multiples, que l'on traîne à l'arrière des tracteurs.

Dans tous les cas, pour empêcher les roues du tracteur de patiner, on est amené à charger lourdement le tracteur à l'aide de gueuses en fonte ou autres, et à monter sur le tracteur des pneus spéciaux, de grandes dimensions.

En chargeant exagérément le tracteur, on augmente inévitablement sa consammation d'énergie, et une grande partie de la puissance du tracteur est ainsi utilisée pour effectuer le déplacement du lest de gueuses, ce qui représente un certain gaspillage. Par ailleurs, les pneus spéciaux utilisés sont très coûteux. Enfin, le poids élevé du tracteur constitue un inconvénient du fait que les roues du tracteur tassent fortement le sol sous leur passage, alors que les cultures sont gênées par un sol trop compact.

On connaît par les brevets FR—A— 492 996, et U.S.—A—1 726 177 un dispositif à deux chenilles porte-socs disposées transversalement derrière un tracteur. Ces chenilles sont relevables autour d'axes horizontaux longitudinaux, mais elles demeurent constamment dans un même plan vertical, perpendiculaire à l'axe longitudinal d'avancement du tracteur, ce qui conduit à l'apparition de contraintes importantes pendant le travail.

On connaît également par le brevet U.S.—A—3 454 102 un système à une seule chenille où des chariots porteoutil circulent sur deux rails. Toutefois, aucune compensation des efforts transversaux n'étant prévue, cela oblige à charger exagérément l'arrière du tracteur pour éviter qu'il ne se déplace transversalement''.

L'invention a pour but de réaliser un outillage pour le travail du sol qui permette d'effectuer le travail de la terre sur une bande de grande largeur en un seul passage du tracteur, tout en évitant les inconvénients précités.

Un outillage pour le travail du sol suivant l'invention comprend un chassis susceptible d'être attelé à un tracteur et portant deux chenilles, dont les supports s'étendent horizontalement et transversalement à l'arrière du tracteur, de façon décalée dans le sens tranversal en sorte que les zones propres de travail des chenilles se recoupent dans le plan médian du tracteur (ceci de manière à recouvrir toute la largeur de travail), ces chenilles étant situées l'une derrière l'autre, étant de plus actionnées par la prise de force du tracteur et comportant extérieurement, de place en place, des outils de travail du sol orientés et mis en mouvement de façon symétrique d'une chenille à l'autre, de façon que les composantes latérales de leurs actions sur le sol s'annulent tandis qu'ils engendrent des réactions tendant à faire avancer le tracteur, caractérisé en ce que chaque chenille pivote autour d'un axe ou pivot vertical du chassis, disposé à proximité de l'axe longidudinal de tracteur de telle façon que l'on puisse faire varier, en position travail, l'angle d'inclinaison de la chenille par rapport à cet axe longitudinal et qu'en outre chaque chenille puisse être rabattue complètement pour la position de transport sur route, son axe longitudinal étant alors parallèle à celui du tracteur, des moyens de verrouillage étant prévus pour toute dite inclinaison des chenilles.

Suivant une variante de l'invention, les outils de travail du sol sont constitués par des griffes du type "canadiens", ou des socs de charrue, ou encase des élements de herse.

En plus de la charrue, de la herse, des griffes, tous les outils connus travaillant le sol peuvent s'adapter à cette machine-outil.

Le dessin annexé, donné à titre d'exemple non limitatif, permettra de mieux comprendre les caractéristiques de l'invention.

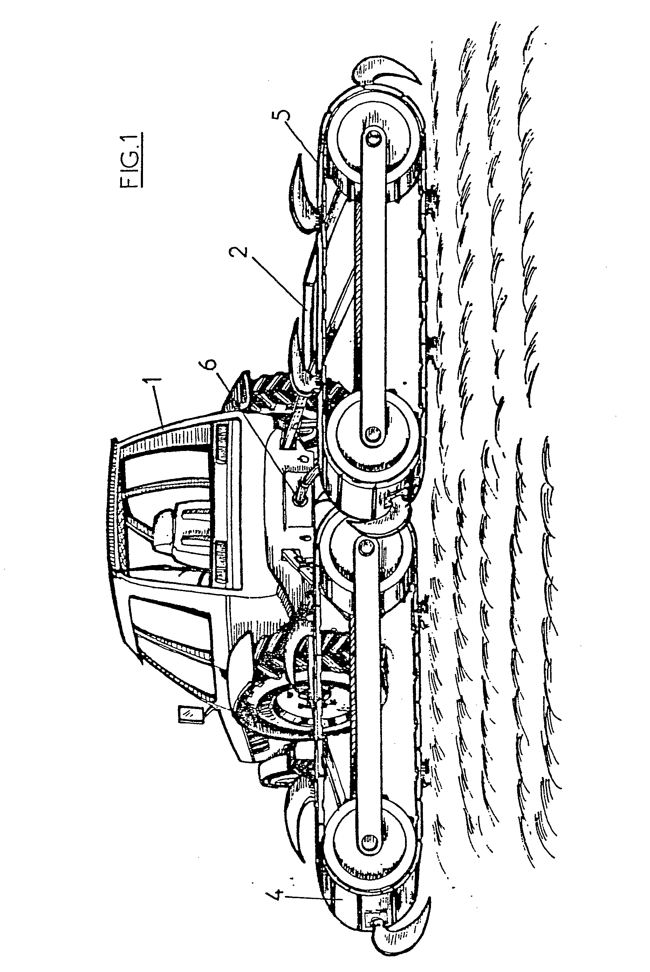

Figure 1 est une vue en perspective d'un outillage agricole suivant l'invention, monté à l'arrière d'un tracteur.

Figure 2 est une vue de dessus de cet outillage.

Figure 3 est une vue latérale de cet outillage.

Figures 4 et 5 sont des vues en plan correspondant à la figure 2, pour d'autres variantes et réglages possibles.

Figure 6 illustre la position de transport sur route.

Figure 7 est une coupe suivant VII—VII (Fig. 4).

Figure 8 est une vue suivant la direction de la flèche VIII (Fig. 4).

Figure 9 montre le détail d'un chariot porteoutil.

Figure 10 illustre une variante à outil tournant.

On a représenté sur les dessins un outillage agricole suivant l'invention, monté à l'arrière d'un tracteur agricole 1. Cet outillage comprend un châssis 2 arrimé à l'arrière du tracteur, pourvu à sa partie inférieure de deux roulettes 3, et muni à sa partie arrière de deux chenilles 4 et 5. Ces deux chenilles s'étendent horizontalement et transversalement à l'arrière du tracteur. Elles sont décalées l'une par rapport à l'autre dans le sens de la largeur, si bien qu'elles couvrent ensemble toute la largeur d'une bande de terrain à travailler. En outre, la chenille gauche 4 est située immédiatement en avant de la chenille droite 5.

Les chenilles sont mises en mouvement à partir d'une prise de force 6 du tracteur. La transmission du mouvement a lieu par l'intermédiaire d'un arbre de transmission 7, de deux joints de Cardan 8 et 9, et de deux renvois d'angles à engrenages 10 et 11.

Chaque chenille comporte extérieurement, de place en place, des outils 12 de travail du sol. Dans ce cas particulier, ces outils sont constitués par des socs de charrue, mais il pourrait tout aussi bien s'agir d'autres types d'outils travaillant le sol par pénétration, tels que des éléments de herse, ou des griffes dites: "canadiens".

On note que les dispositions des outils 12 sont symétriques l'une de l'autre, d'une chenille à l'autre, de façon que les composantes 13 des réactions 14 du sol sur les outils tendant à produire un déplacement latéral de l'outillage s'annulent.

En outre, les outils 12 sont de plus orientés de façon à engendrer, en travaillant le sol, une composante 15 de réaction tendant à faire avancer le tracteur. La puissance nécessaire à l'avance de l'outillage provient ainsi pratiquement uniquement de la prise de force du tracteur, la puissance prélevée au niveau des roues du tracteur ne servant pratiquement plus qu'à faire avancer le tracteur lui-même.

L'outillage agricole suivant l'invention conduit notamment aux avantages suivants:

—il n'est plus nécessaire de charger le tracteur avec des gueuses ou autre lest: le tracteur ne patine pas;

—on ne perd plus de puissance inutilement par un transport de lest ou par patinage des roues: un meilleur rendement permet d'utiliser le plus grande partie de l'énergie consommée au seul travail du sol;

—une meilleure utilisation de l'énergie permet d'employer un tracteur moins puissant pour effectuer le même travail qu'auparavant: à la place d'un tracteur de 300 chevaux, on utilisera par exemple un tracteur de 150 chevaux d'un prix trois fois moins élevé;

—la suppression du lest et l'utilisation d'un tracteur de plus petite taille sont deux facteurs qui entraînent une réduction du poids sur les roues, et un moindre serrage du sol, ce qui est avantageux pour les cultures;

—le travail sur une bande de grande largeur permet d'espacer les passages du tracteur, le sol étant d'autant moins serré;

—le travail en grande largeur permet un gain de temps, le travail du tracteur à chaque passage étant multiplié par deux ou par trois.

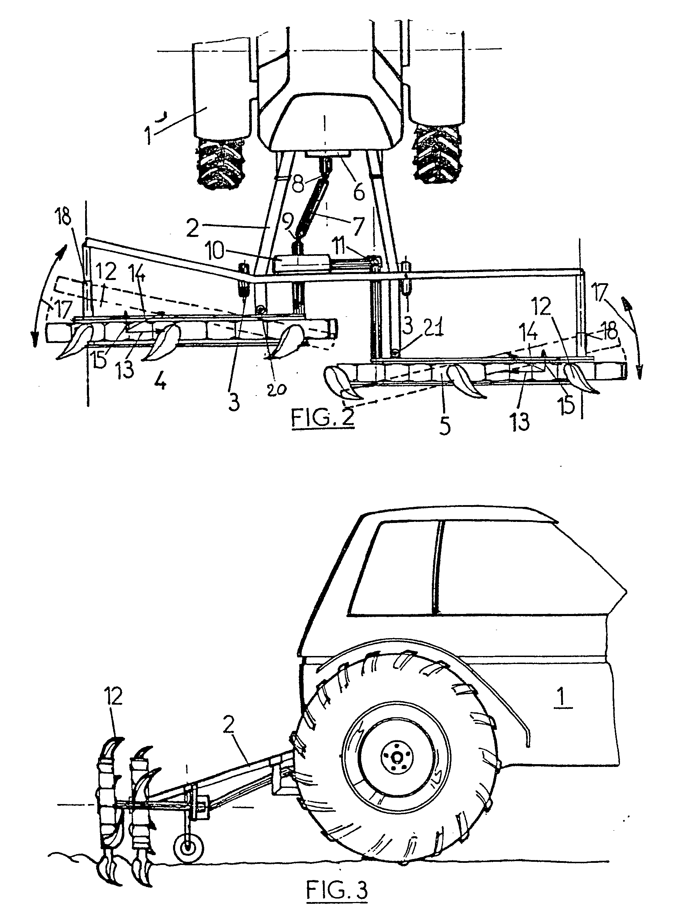

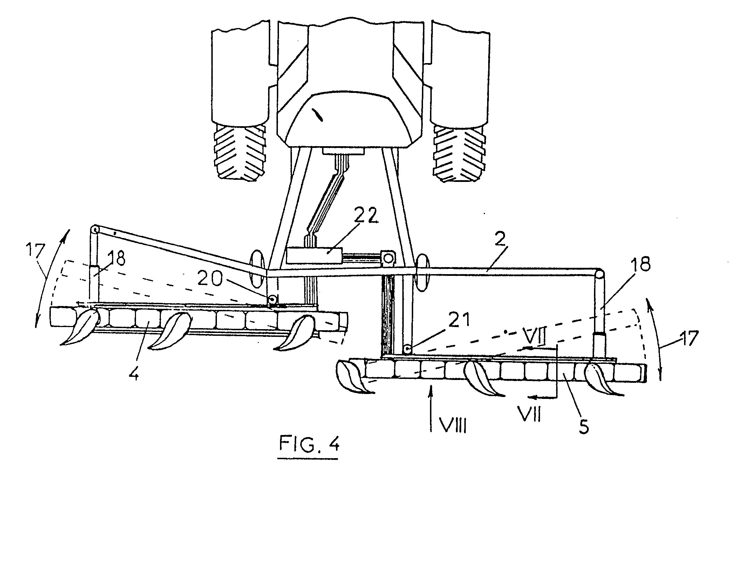

Suivant l'invention, le support 19 de chaque chenille 4, 5 est articulé sur un axe vertical 20, 21 qui lui est propre sur le chassis 2 portée par le tracteur. On peut donc faire varier l'angle d'inclinaison 17 de chaque chenille 4, 5 autour de son axe de pivot 20, 21, comme cela apparaît sur la vue en plan de la Fig. 4. Une pièce de verrouillage 18, réglable ou télescopique, permet de bloquer chaque chenille 4, 5 à l'angle d'orientation 17 choisi. Ces pièces 18 sont situées sur les faces latérales du chassis 2. Une boîte à vitesses 22 permet de choisir à volonté la vitesse linéaire de circulation des chenilles 4 et 5, en fonction de leur inclinaison 17 et du type des outils 12 qu'elles portent. Grâce à cette disposition, on peut régler l'ensemble pour définir sur le sol des réactions 14 (Fig. 2) ayant es composantes 13 et 15 qui correspondent à une vitesse d'avancement donnée de la machine, et à un pas donné pour les sillons creusés dans le sol.

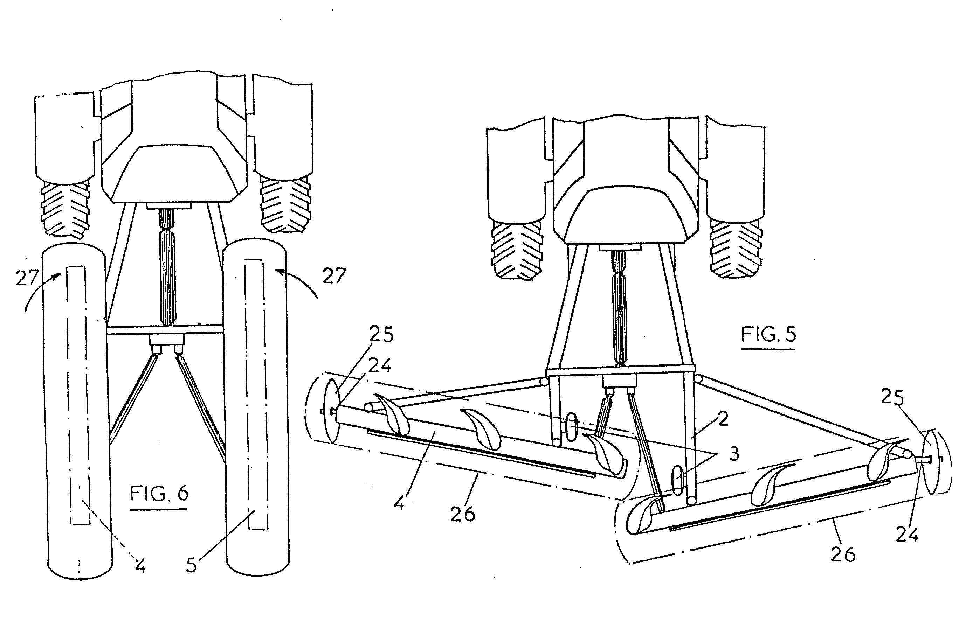

Dans la variante illustrée sur la Fig. 5, le chassis 2 comporte des roulettes 3 réglables en hauteur par des vérins connus, non représentés. Ces roulettes 3 roulent au sol et permettent de régler en hauteur la position du dispositif selon l'invention en cours de travail.

Par ailleurs, à chaque extrémité du support 19 portant une chenille 4 ou 5, on monte un axe orientable fixe 24 sur lequel peut librement tourner un disque trancheur 25. Chaque axe 24 est sensiblement horizontal, et son disque trancheur 25 travaille le sol de façon à y délimiter nettement la largeur de la bande de terre labourée.

L'ensemble de chaque chenille 4, 5 est préférablement coiffé par un carter de protection 26.

La Fig. 6 est une vue en plan montrant l'ensemble du dispositif selon l'invention replié en position de transport sur route. Grâce aux articulations sur les pivots 20 et 21, on voit qu'on peut rabattre les chenilles 4 et 5 contre les côtés du chassis 2, comme schématisé par les flèches 27.

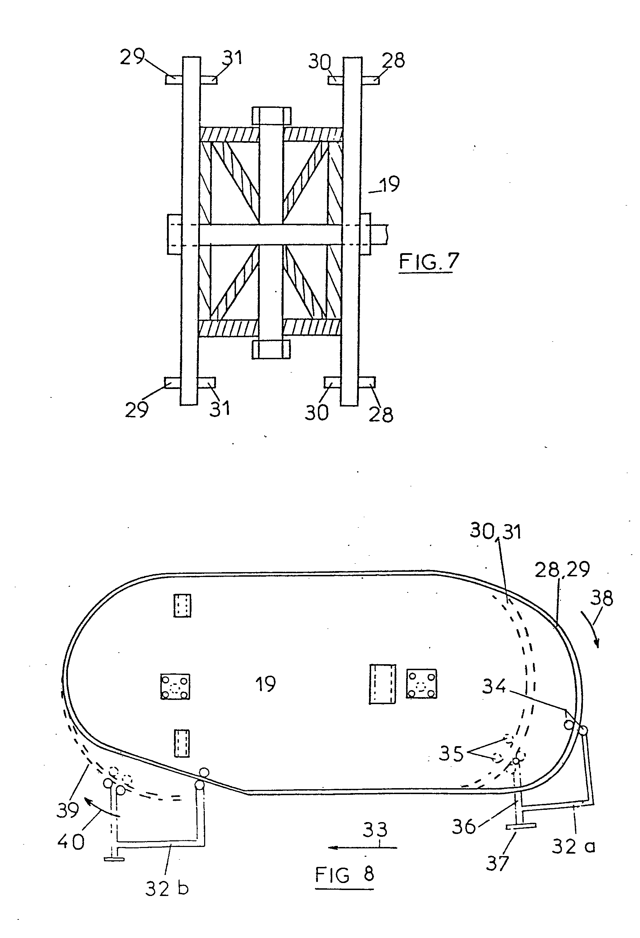

La Fig. 7 montre en coupe un support 19 de chaque chenille 4 ou 5. On voit que le chemin de roulement est matérialisé par deux rails extérieurs, 28 sur la face avant et 29 sur la face arrière, ainsi que par deux rails intérieurs, 30 sur la face avant et 31 sur la face arrière.

Les deux rails extérieurs 28 et 29 ont le même contour, et leurs trajets fermés se confondent en projection, comme cela apparaît sur la Fig. 8. Il en va de même pour les seux rails intérieurs 30 et 31 dont le contour fermé, commun en projection, est figuré en pointillés.

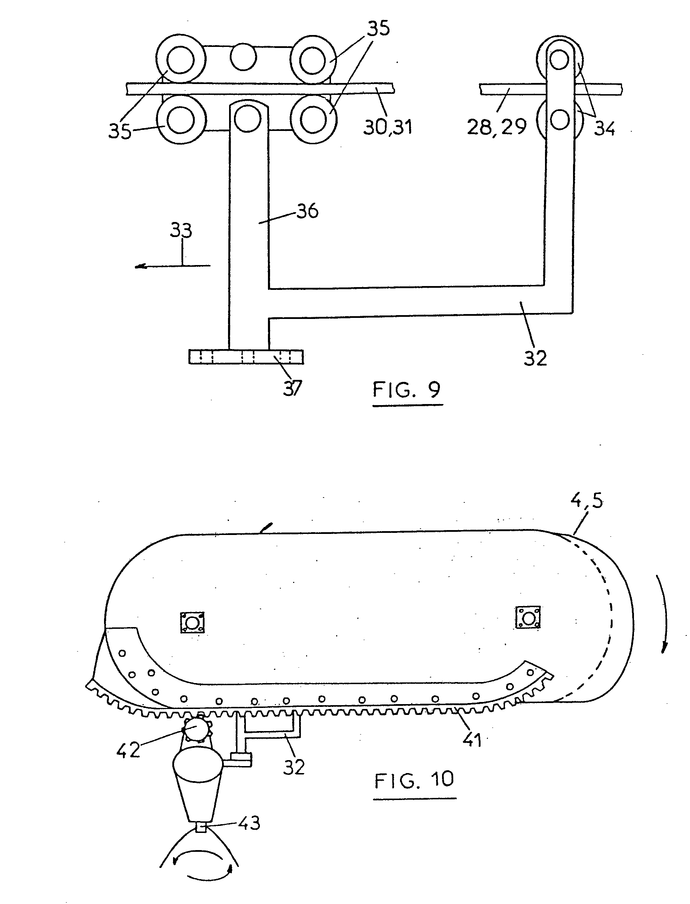

Sur ces quatre rails roule une succession de chariots 32, qui circulent dans le sens indiqué par les flèches 33. La succession articulée de ces chariots 32 constitue chacune des deux chenilles 4 et 5. Sur la Fig. 8, deux seulement de ces chariots ont été représentés, assortis des références 32a et 32b. On voit que chaque chariot 32 roule par des galets arrière 34 sur les rails extérieurs 28 et 29, tandis qu'à sa partie avant il comporte des galets avant 35 roulant sur les rails intérieurs 30 et 31 (Fig. 9).

Par ailleurs l'armature ou corps de chaque chariot 32 comporte une potence 36 terminée par une platine 37 sur laquelle on fixe de façon amovible les outils tels que des socs de charrue 12.

On remarque que, dans la moitié inférieure des courbes (Fig. 8), le trajet des rails intérieurs 30, 31 est différent de celui des rails extérieurs 28, 29. Plus particulièrement:

—dans la courbe 38 la plus éloignée de l'axe médian du tracteur (Fig. 2 et 8), le trajet des rails extérieurs 28, 29 so prolonge au-delà de celui des rails intérieurs 30, 31;

—au contraire, dans la courbe 39 le plus proche de l'axe médian longitudinal du tracteur, le trajet des rails extérieurs 28, 29 reste en-deça de celui des rails intérieurs 30, 31;

Grâce à cette disposition, on voit que la potence 36 de chaque chariot 32 bascule dans les courbes 38 et 39 pour y prendre une orientation différente de celle du rayon de courbure. Autrement dit:

—en 32a, le chariot "plonge" vers le sol pour y faire pénétrer franchement l'outil 12;

—puis jusqu'en 32b, le chariot et l'outil circulent horizontalement en restant parallèles à eux-mêmes;

—enfin en 32b, le chariot bascule vers le haut comme indiqué par la flèche 40, ce qui a pour effet de faire sortir franchement l'outil 12 hors du sol, et fournit un travail plus net.

Sur la variante de la Fig. 10, on prévoit une crémaillère fixe 41 disposée le long du brin inférieur du trajet des rails. Sur cette crémaillère engrène le pignon 42 d'un outil rotatif 43 dont on a équipé la platine 37 de chaque chariot 32. Aussi, quand les chariots des chenilles 4 et 5 circulent, les outils 43 entrent en rotation pendant tout le temps où ils circulent près du sol. Ces outils peuvent être utilisés pour diverses applications, notamment pour faner.

**Revendications**

1. Outillage pour le travail du sol comprenant un chassis (2) susceptible d'être attelé à un tracteur (1) et portant deux chenilles (4), (5), dont les supports (19) s'étendent horizontalement et transversalement à l'arrière du tracteur (1), de façon décalée dans le sens transversal en sorte que les zones propres de travail des chenilles se recoupent dans le plan médian du tracteur, ceci de manière à recouvrir toute la largeur de travail, ces chenilles (4), (5) étant situées l'une derrière l'autre, étant de plus actionnées par la prise de force du tracteur (1) et comportant extérieurement, de place en place, des outils de travail du sol (12), (43) orientés et mis en ˙mouvement de façon symétrique d'une chenille à l'autre, de façon que les composantes latérales de leurs actions sur le sol s'annulent tandis qu'ils engendrent des réactions tendant à faire avancer le tracteur, caractérisé en ce que chaque chenille (4), (5) pivote autour d'un axe ou pivot vertical (20), (21) du chassis (2), disposé à proximité de l'axe longitudinal du tracteur (1) de telle façon que l'on puisse faire varier, en position travail, l'angle d'inclinaison (17) de la chenille par rapport à cet axe longitudinal et qu'en outre chaque chenille puisse être rabattue complètement pour la position de transport sur route, son axe longitudinal étant alors parallèle à celui du tracteur, des moyens de verrouillage (18) étant prévus pour toute dite inclinaison des chenilles (4), (5).

2. Outillage suivant la revendication 1, caractérisé en ce que les outils (12) de travail du sol sont constitués par des griffes du type "canadien".

3. Outillage suivant l'une quelconque des revendications précédentes, caractérisé en ce que la transmission du mouvement entre la prise de force (6) du tracteur (1), et les chenilles (4), (5) a lieu par l'intermédiaire d'un arbre de transmission (7), de deux joints de Cardan (8) et (9) et de deux renvois d'angles à engrenages (10) et (11).

4. Outillage suivant l'une quelconque des revendications précédentes, caractérisé en ce que chaque chenille (4), (5) peut être verrouillée en rotation autour de son pivot vertical (20), (21), à l'aide d'une pièce de verrouillage (18), ces pièces de verrouillage étant situées sur les faces latérales respectives du chassis (2), tandis que les réactions du sol sur les outils (12) peuvent définir un pas d'avancement (ou rapport vitesse longitudinale du tracteur/ vitesse de cheminement transversal des chenilles) capable de faire avancer l'ensemble machine-tracteur, sans utiliser la puissance motrice au niveau des roues du tracteur.

5. Outillage suivant l'une quelconque des revendications précédentes, caractérisé en ce que son chassis (2) comporte des roulettes (3) roulant au sol et réglables en hauteur.

6. Outillage suivant l'une quelconque des revendications précédentes, caractérisé en ce que chaque chenille (4), (5), comporte à son extrémité externe, un axe orientable fixe (24) sur lequel tourne un disque trancheur (25) qui travaille le sol.

7. Outillage suivant l'une quelconque des revendications précédentes, caractérisé en ce que le support (19) de chaque chenille (4), (5) comporte deux types de rail à trajet fermé, le long desquels roulent les chariots (32) formant la chenille, à savoir:

—au moins un rail extérieur (28), (29), dont le trajet déborde dans la courbe externe (38) de la chenille, tandis qu'il reste en deçà dans la courbe interne (39);

—au moins un rail intérieur (30), (31), dont le trajet déborde dans la courbe interne (39) de la chenille alors qu'il reste en deçà dans la courbe externe (38).

8. Outillage suivant la revendication 7, caractérisé en ce que chaque chariot (32) comporte:

—des galets avant (35) roulant sur les rails intérieurs (30), (31);
—et des galets arrière (34) roulant sur les rails extérieurs (28), (29).

9. Outillage suivant l'une quelconque des revendications 1, et 3 à 8, caractérisé en ce que le long du brin inférieur de chaque chenille (4), (5) se trouve une crémaillère fixe (41) sur laquelle engrène un pignon tournant (42) dont est pourvu chaque chariot (32) pour faire tourner l'outil rotatif (43) dont il est pourvu.

**Patentansprüche**

1. Werkzeug zur Bodenbearbeitung, mit einem Chassis (2), das dazu vorgesehen ist, an einem Traktor (1) befestigt zu werden, und das zwei Ketten (4, 5) aufweist, deren Tragkonstruktion (19) sich horizontal und quer zur Rückseite des Traktors (1) erstreckt, und zwar derart in Querrichtung geneigt, daß sich die eigentlichen Arbeitszonen der Ketten in der Mittelebene des Traktors schneiden, und zwar derart, daß sie die gesamte Arbeitsbreite überdecken, wobei die Ketten (4, 5) hintereinander angeordnet und durch einen einen Kraftantrieb vom Traktor (1) angetrieben sind, und wobei die Ketten ferner Bodenbearbeitungswerkzeuge (12, 43) aufweisen, die bezüglich der beiden Ketten symmetrisch angeordnet und angetrieben sind, derart, daß die seitlichen Komponenten ihrer auf den Boden einwirkenden Kräfte sich aufheben, während sie Reaktionskräfte im Sinne eines Vorantreibens des Traktors erzeugen, dadurch gekennzeichnet, daß jede Raupenkette (4, 5) um eine vertikale Schwenkachse (20, 21) des Chassis (2) schwenkt, die im Bereich der Längsachse des Traktors (1) derart angeordnet ist, daß man in der Arbeitsposition den Neigungswinkel (17) der Raupenkette in Bezug auf diese Längsachse verändern kann, und daß außerdem jede Kette zum Zwecks des Transportes auf der Straße vollständig abgelassen werden kann, so daß ihre Längsachse parallel zu jener des Traktors verläuft, und daß Verriegelungsmittel (18) für die genannte Neigung der Ketten (4, 5) vorgesehen sind.

2. Werkzeug nach Anspruch 1, dadurch gekennzeichnet, daß die Bodenbearbeitungswerkzeuge (12) aus sogenannten kanadischen Schaufeln bestehen.

3. Werkzeug nach einem der Ansprüche 1 bis 2, dadurch gekennzeichnet, daß die Kraftübertragung zwischen der Leistungsabnahme (6) des Traktors (1) und den Ketten (4, 5) mittels einer Kraftübertragungswelle (7), zweier Kardan-Gelenke (8, 9) sowie zwei Kegelradgetrieben (10, 11) erfolgt.

4. Werkzeug nach einem der Ansprüche 1 bis 3, dadurch gekennzeichnet, daß jede Kette mittels einer Verriegelungsvorrichtung (18) bezüglich ihrer Verdrehung um ihre vertikale Schwenkachse (20, 21) verriegelt werden kann, und daß die Verriegelungseinrichtung an den jeweiligen Seitenflächen des Chassis (2) vorgesehen ist, während die Reaktionskräfte des Bodens auf die Werkzeuge (12) einen Vorschub (oder Verhältnis der Fahrgeschwindigkeit des Traktors/Geschwindigkeit der Ketten in Querrichtung) aufbringen, das dazu in der Lage ist, die gesamte Einheit Maschine-Traktor zu bewegen, ohne die Motorkraft mittels der Räder des Traktors zu benutzen.

5. Werkzeug nach einem der Ansprüche 1 bis 4, dadurch gekennzeichnet, daß das Chassis (2) Röllchen (3) umfasst, die auf den Boden abrollen und höhenverstellbar sind.

6. Werkzeug nach einem der Ansprüche 1 bis 5, dadurch gekennzeichnet, daß jede Kette (4, 5) an ihrem Außenende eine feste, ausrichtbare Achse (24) trägt, um welche eine den Boden bearbeitende Scheibe (25) umläuft.

7. Werkzeug nach einem der Ansprüche 1 bis 6, dadurch gekennzeichnet, daß die Tragkonstruktion (19) einer jeden Kette (4, 5) zwei Schienen mit geschlossener Lauffläche aufweist, entlang welcher die die einzelne Kette bildenden Wagen (32) abrollen, nämlich:

—wenigstens eine Außenschiene (28, 29), deren Verlauf über die Außenkurve (38) der Kette hinausgeht, während er innerhalb der Innenkurve (39) verbleibt;
—wenigstens eine Innenschiene (30, 31), deren Verlauf über die Innenkurve (39) der Kette hinausgeht, während er in der Außenkurve (38) verbleibt.

8. Werkzeug nach Anspruch 7, dadurch gekennzeichnet, daß jeder Wagen (32) die folgenden Elemente aufweist:

vordere Rollen (35), die auf den inneren Schienen (30, 31) abrollen;
hintere Rollen (34), die auf den äußeren Schienen (28, 29) abrollen.

9. Werkzeug nach einem der Ansprüche 1 und 3 bis 8, dadurch gekennzeichnet, daß sich innerhalb des unteren Trummes einer jeden Kette (4, 5) eine feste Zahnstange (41) befindet, mit welcher ein umlaufendes Ritzel (42) kämmt, womit jeder Wagen (32) ausgerüstet ist, um das Drehwerkzeug (43), mit dem er ausgerüstet ist, in Umlauf zu versetzen.

**Claims**

1. Tooling for working the soil comprising a chassis (2) able to be attached to a tractor (1) and carrying two tracks (4, 5) of which the supports (19) extend horizontally and transversely at the rear of the tractor (1), staggered in the transverse direction so that the individual working zones of the tracks overlap in the centre plane of the tractor in such a way as to cover all the width of the work area, these tracks (4, 5) being situated one behind the other and being driven by the power take-off of the tractor (1), and carrying externally, at intervals, tools for working the soil (12, 43), directed and driven symmetrically as regards the two tracks so that the lateral components of their action on the soil cancel one another, whilst they give rise to reactions which tend to drive the tractor forward, characterised in that each track (4, 5) revolves around a vertical shaft or pivot (20, 21) on the chassis (2) located near to the longitudinal axis of the tractor (1) in such a way that it is possible to vary, in the working position, the angle of inclination (17) of the track in relation to this longitudinal axis, and that in addition each track may be completely folded back into the position for road transport, its longitudinal axis being then parallel to that of the tractor, a method of locking (18) being provided for any said inclination of the tracks (4, 5).

2. Tooling according to Claim 1, characterised in that the tools (12) for working the soil are constituted by claws of the "Canadian" type.

3. Tooling according to either one of the preceding claims, characterised in that the transmission of movement between the power take-off (6) of the tractor (1) and the tracks (4, 5) takes place by means of a transmission shaft (7) with two universal joints (8) and (9) and two bevel gears (10) and (11).

4. Tooling according to any one of the preceding claims, characterised in that each track (4, 5) may be locked in position around its vertical pivot (20, 21) by means of a locking component (18), these locking components being located on the respective lateral faces of the chassis (2), whilst the reactions of the soil on the tools (12) may give rise to a forward movement (or a relationship of longitudinal speed of the tractor/transverse travel speed of the tracks) able to make the whole machine-tractor unit move forward without using the driving power of the tractor wheels.

5. Tooling according to any one of the preceding claims, characterised in that its chassis (2) carries rollers (3) which roll on the ground and are adjustable in height.

6. Tooling according to any one of the preceding claims, characterised in that each track (4, 5) carries at its outer end a fixed shaft (24), which may be adjusted in direction, upon which there turns a cutting disc (25) which works the soil.

7. Tooling according to any one of the preceding claims, characterised in that the support (19) of each track (4, 5) includes two closed-circuit rails along which run the sections (32) forming the track, namely:

— at least one exterior rail (28, 29) of which the path extends beyond the path of the other rail in the outer curve (38) of the track, whilst it remains inside the path of the other track in the inner curve (39);
— at least one interior rail (30, 31) of which the path extends beyond the path of the other rail in the inner curve (39) of the track, whilst it remains inside the path of the other rail in the outer curve (38).

8. Tooling according to Claim 7, characterised in that each section (32) comprises:

— front rollers (35) running on the interior rails (30, 31);
— and rear rollers (34) running on the exterior rails (28, 29).

9. Tooling according to any one of the Claims 1 and 3 to 8, characterised in that along the lower run of each track (4, 5) there is a fixed rack (41) with which there engages a revolving pinion (42) on each section (32) to revolve the rotating tool (43) with which it is equipped.

FIG.1

FIG. 2

FIG. 3

2

FIG. 4

FIG.5

FIG.6

FIG.7

FIG 8

FIG. 9

FIG. 10